(19) Europäisches Patentamt
European Patent Office
Office européen des brevets

(11) **EP 2 244 197 A1**

(12) **EUROPEAN PATENT APPLICATION**

(43) Date of publication:
**27.10.2010 Bulletin 2010/43**

(51) Int Cl.:
*G06F 17/30* (2006.01)    *G06F 9/44* (2006.01)
*G06F 17/27* (2006.01)

(21) Application number: **10160829.7**

(22) Date of filing: **23.04.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS**<br><br>(30) Priority: **24.04.2009  NL 2002791** | (71) Applicant: **Phasar B.V.**<br>**6533 GV Nijmegen (NL)**<br><br>(72) Inventor: **Koster, Cornelis Hermanus Antonius**<br>**NL-6533 GV, Nijmegen (NL)**<br><br>(74) Representative: **Ketelaars, Maarten F.J.M.**<br>**Nederlandsch Octrooibureau**<br>**J.W. Frisolaan 13**<br>**2517 JS  Den Haag (NL)** |

(54) **User interface for querying dependency relations between textual data elements in a memory**

(57)     A method of and a computer arrangement for presenting a user interface on a display. A first box is presented on the display to a user, the first box having multiple sides. The user is allowed to perform an action on at least one of the sides of the box. The action is interpreted as an instruction to be carried out by the computer arrangement and the instruction is selected from a set of instructions including an instruction to establish a relation between a first term to be put into the first box by the user and a second term in a second box on the display.

*Fig 5*

EP 2 244 197 A1

**Description**

**1. Field of the invention**

The present invention relates to a user interface of a computer arrangement that allows a user to set up and query relations between data elements in a memory.

**2. Background of the invention**

PHASAR (Phrase-based Accurate Search And Retrieval) is a new kind of search engine, in which both documents and queries are represented as a collection of dependency graphs, rather than as a bag of keywords.

Because both the way of matching of PHASAR and the intended way of working of the searcher are very different from those in the traditional keyword-based search engines, PHASAR has a novel Graphical User Interface (GUI), differing from traditional interfaces in functionality and behaviour. This interface (called the Dungeons-and-Dragons interface, D&D for short) was designed to make it easy for the non-linguistical user to construct a query in the form of a dependency graph interactively and in an informed way.

The functions of the GUI are:

- to allow the searcher to construct a query interactively, incrementally and exploratively

- to provide the searcher with feedback about the yield of the query (the matches of the query in the documents)

- to provide the searcher with feedback about the possible specializations of the query (the terms with which the query can be extended to make it more precise) and their effect on the yield

- to provide the searcher with feedback about the possible generalizations of the query (replacements of a term in the query by a more general term from one of the thesauri) and their effect on the yield.

The following background aspects of the invention (PHASAR) are given to make the actual presentation of the interface understandable. They have been described in

- C.H.A. Koster, M. Seutter and O. Seibert (2007), Parsing the Medline Corpus. Proceedings RANLP 2007, pp 325-329.

- C.H.A. Koster, O. Seibert and M. Seutter (2006), The PHASAR Search Engine. Proceedings NLDB 2006, Springer LNCS 3999, pp 141-152.

2.1 Dependency graphs and dependency triplets

In the present document the terms "dependency graph" and "dependency triplet" are used. A *dependency graph* is a directed oriented acyclic graph whose nodes are marked with terms and whose arcs are marked with relations. A *term* is either a word from PHASAR's lexicon (mostly a name or proper noun, but other word categories are also possible), or a thesaurus term (the name of a category in one of the thesauri) or a collocation (a sequence of words forming together one term). As an example, reference is made to the sentence

*In humans, PGs prevent the mucosal damage caused by aspirin and ethanol* This sentence can be parsed, which results in the following dependency graph (after lemmatization and transformation of one of the sentences from passive to active):

By a *dependency triplet* we mean a triplet of the form [*term1, REL, term2*], where

- *REL* is the marker for a dependency relation, where the relation is a linguistic relation,

- *term1* is the head of the triplet, and *term2* the modifier.

A dependency graph can be unnested into dependency triplets, one for each arc of the graph. During unnesting, the head and the modifier of the triple may be lemmatized (reduced to their lemma). As an example, the previous graph can be unnested to:

| relation | example |
|---|---|
| subject relation | [PG,SUBJ,prevent] |
| subject relation | [Aspirin, SUBJ,cause] |
| subj ect relation | [ethanol,SUBJ,cause] |
| object relation | [cause,OBJ,damage] |
| object relation | [prevent,OBJ,damage] |
| attribute relation | [damage,ATTR, mucosal] |
| preposition relation | [prevent,IN,human] |

In the PHASAR system, each sentence in the documents is syntactically analyzed and transduced to one or more dependency graphs, which are then unnested into a set or bag of dependency triplets. Queries are analyzed, transduced and unnested in the same way, so that a query is represented internally as a collection of triplets rather than the traditional bag of keywords.

2.2 Queries

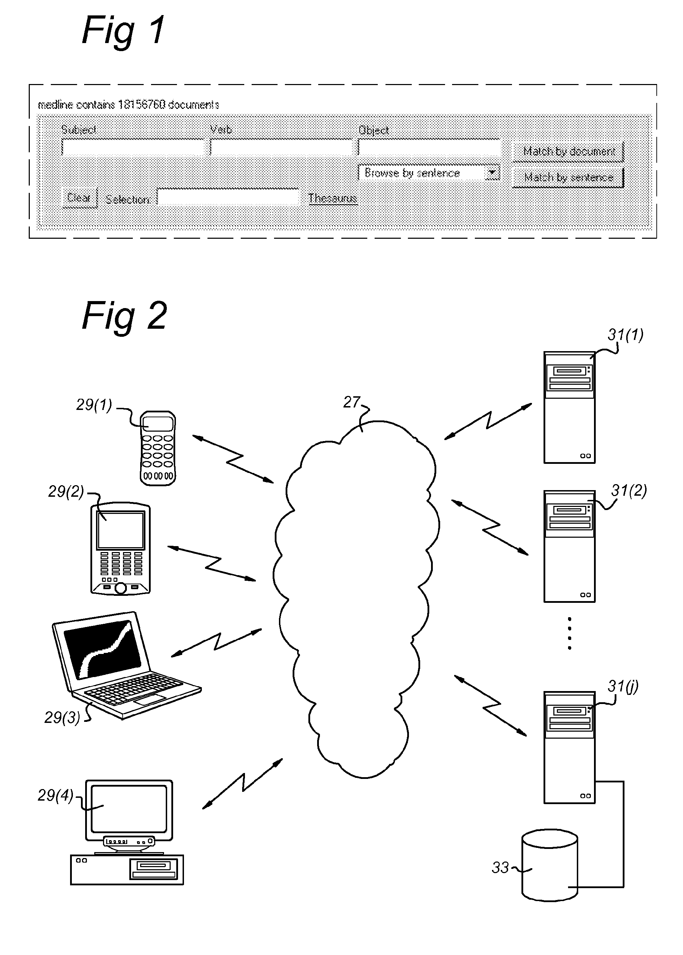

Unlike traditional search engines, in PHASAR a query is not a sequence of words but a (fragment of a) dependency graph. One of the hardest things in designing the interface is to elicit from the searcher a dependency graph without demanding undue linguistic knowledge or conveying a sense of doing linguistic work.
Letting the searcher give the query in the form of a sentence is attractive but dangerous, because sentences are often ambiguous; furthermore, it is not easy to give an incomplete sentence (leaving one or more gaps).
An approach described by the inventor of the present invention earlier (cf. NLDB paper 2006), but also apparently taken by at least one other group (the MEDIE system in Japan)[1] is to let the searcher give separately the subject, verb and object of a sentence.
In our earlier PHASAR/Medline system this "fruit machine" or "slot machine" interface (so named for its similarity to a well-known gambling device) looked like the interface shown in figure 1.
[1] www-tsujii.is.s.u-tokyo.ac.jp/medie/
In figure 1, the items have the following meaning:

- *Subject:* subject of the sentence to be searched for
- *Verb:* verb of the sentence to be searched for
- *Object:* object of the sentence to be searched for.

In the "fruitmachine" interface, the query has to be entered into the three fields 'Subject', 'Verb' and 'Object'. This approach solves most of the ambiguity problem and it allows the searcher to give an incomplete sentence by leaving any of those fields unspecified. The notions of subject, verb and object are sufficiently familiar for professional searchers. On the other hand, this approach is only appropriate for finding elementary sentences known as "factoids", and does not provide a more fine-grained way of searching. It presents the documents as a rigid database of factoids, rather than as a searchable universe, and is not capable of providing all useful feedback from the index.
The present interface overcomes these shortcomings.

2.3 Query matching

In the PHASAR system different forms of matching are implemented, in order of increasing precision (and

decreasing recall):

1. <u>document matching</u>

A query matches a document if all triplets derived from the query by unnesting co-occur in the result of unnesting that document

2. <u>passage matching</u>

A query matches a passage if all triplets derived from the query by unnesting co-occur in the result of unnesting that passage

3. <u>sentence matching</u>

A query matches a sentence if all triplets derived from the query by unnesting co-occur in the result of unnesting that sentence

4. <u>phrase matching</u>

A query matches a phrase forming part of a sentence if the dependency graph of the query is contained (as a subgraph) in the dependency graph of the sentence.
This last form of matching is the most precise form of matching, but also computationally the most expensive. The user may choose between these different matching styles at any point in the search process.

<u>2.4 Browsing</u>

The PHASAR system offers different browsing modes, showing larger or smaller portions of the documents.

1. <u>document browsing</u>

Showing all or parts of the complete text of a document, not necessarily in the original layout, and while highlighting in various colours the terms matching the query and the terms covered by certain thesauri.

2. <u>passage browsing</u>

Per document, showing those sections or paragraphs that contain a match of the query, with similar highlighting.

3. <u>sentence browsing</u>

Per document, showing those sentences that contain a match of the query, also with highlighting.
The use of passage browsing or sentence browsing reduces the cognitive load in browsing. The highlighting attracts the attention to possibly important terms. A click-through to the original document text may also be provided.
Words from the text shown may by drag-and-drop be entered into an empty box, or added into a non-empty box.

<u>2.5 Thesauri</u>

The PHASAR system makes use of certain thesauri which relate words and collocations to thesaurus terms.
At any point during the search process, the user may select or de-select one or more of the thesauri. Furthermore, the user may consult the selected thesauri and use terms from the thesauri as search terms.

<u>2.6 Other prior art.</u>

It is observed that Microsoft's computer program Visio provides means to define boxes and arrows mutually connecting two or more boxes. Reference is, e.g., made to "Add and Glue connectors with AutoConnect" 2007, XP002550690. However, a user needs at least two different actions to define a new box connected to another box: he has to select a new box from a "stencil" and move a pointer while dragging the new box such that the pointer is moved over a blue triangle. When being located above such a triangle the mouse button should be released and a connector is added between the two boxes.

Also, in Visio the configuration of boxes has no interpretation as a dependency graph.

**Summary of the invention**

The present invention is directed to providing a user interface allowing a user to define a dependency graph for a computer arrangement in an easier and quicker way than the prior art.

In an embodiment, the present invention is directed to an improved user interface for a computer arrangement that allows a user to easily instruct the computer arrangement to explore the dependency relations between textual items in a large collection of syntactically analysed natural language text, to construct dependency graphs from those textual items and to retrieve those graphs from the analysed collection that contain the constructed dependency graphs as a subgraph. One advantageous application is where the graphs define one or more phrases comprising items and relations between different items that are used for searching in a database.

To that effect the present invention relates to a computer arrangement comprising a processor, a display, a memory, and an input device, the display, memory and input device being connected to the processor, the input device allowing a user to control a cursor on said display, the memory comprising instructions and data allowing the processor to present the following user interface:

- to present a configuration of boxes on the display to a user, said boxes having either a multisided polygon shape or other convex shape, and each box capable of containing text marking that box, and each of said boxes being connected by one or more directed arrows to or from at least one other box, said one or more arrows each being marked by a relator, said relator being either empty or a text indicating a linguistic relation;
- to present an initial configuration comprising one empty box;
- to allow said user to activate any box in said configuration by either

   ○ moving the cursor on said display into said box or clicking said cursor at least once when located on said box by means of said input device, or
   ○ performing a touch action on said box on said display when said display is a touch screen;

- to allow said user to modify the text contained in said activated box;
- to allow said user to perform an action on one of the sides of said activated box, said action being interpreted as an instruction to be carried out by said processor.

In an embodiment, the instructions allow the processor to compute from the configuration a corresponding dependency graph, each box in the configuration representing a node in the dependency graph marked with the text in the box and each arrow in the configuration representing an edge in the dependency graph marked with the relator of the arrow.

In a further embodiment, the instructions and data allow the processor to use data of the dependency graph as query data, to send the query data to a server arranged to perform a query corresponding to the query data, and to receive retrieved data from the server in reply to the query.

In a further embodiment, the instructions and data allow the processor to perform the following:

- to receive a first action from the user on a first side of an activated box in the configuration, and to interpret the first action as an instruction to add a new box next to the first side of the activated box on the display, the new box being empty and connected to the activated box by an arrow, the arrow being either directed from said activated box to said new box or from said new box to said activated box.

In this embodiment, only one single action by a user is needed to define the structure for a new box and a relation between an activated box and the new box. Furthermore, in an embodiment,

- when the first side is a right side of the activated box, then the arrow is directed from the activated box to the new box,
- when the first side is a left side of the activated box, then the arrow is directed from the new box to the activated box.

In a further embodiment, the instructions and data allow the processor to perform the following action: to receive a second action from the user on a second side of the activated box, to interpret the second action as a request for feedback by showing to the user a list of possible heads or modifiers and relations on the display and allowing the user to make a selection from that list.

In a further embodiment, the instructions and data allow the processor to perform the following action: to receive a third action from the user on a third side of the activated box, and to interpret the third action as an instruction to drag the activated box to another position on the display, all arrows from other boxes to the activated box and to other boxes from the activated box moving accordingly.

In a further embodiment, the input device comprises a mouse and the action on one of the sides of the activated box is one of the following actions:

- a user pressing a button of the mouse while dragging the cursor across the side of the box;

- a user clicking a button of a mouse when the cursor is located on a tab immediately next to the side, the tab being a small rectangle or other convex shape, the tab possibly having a distinctive colouring.

In a further embodiment, the display is a touch screen and the action on one of the sides of the activated box is one of the following actions:

- a user exerting pressure with some means on a location in or near to the box and then dragging the means across the side of the box;

- a user exerting pressure with some means on a location in the display where the display shows a tab immediately next to the side.

In an embodiment, the invention relates to a system with such a computer arrangement and a server, the server being arranged to receive the query data, to perform the query, to retrieve data in accordance with said query and send retrieved data to said computer arrangement.

The invention also relates to a method as claimed in claim 11, a computer program product as claimed in claim 12, and a data carrier as claimed in claim 13.

**Brief description of the drawings**

The invention will be explained in detail with reference to some drawings that are only intended to show embodiments of the invention and not to limit the scope. The scope of the invention is defined in the annexed claims and by its technical equivalents.

The drawings show:

Figure 1 shows a user interface according to the prior art,

Figure 2 shows an example of a network in which the invention can be used,

Figure 3 shows an example of a computer arrangement that can be used in an implementation of the present invention,

Figure 4 shows an example of a dependency graph, representing relations between several terms in a sentence,

Figure 5 shows an example of a box in a proposed user interface,

Figures 6A, 6B, 6C show examples of instructions in a proposed user interface,

Figures 7A, 7B show an example of a query result,

Figures 8A through 8G show intermediate displays shown on a display while using the method of the present invention,

Figures 9A through 9E show some examples to illustrate possible feedback by the system.

**Detailed description of embodiments**

3. Technical environment.

Figure 2 shows a schematic view of a network in which the present invention can be implemented. However, it may be observed that the invention can also be implemented on one single computer or client/server arrangement.

Figure 2 shows a plurality of terminals 29(i), i = 1, 2, 3, 4, ...,I. They may be implemented as is known to persons skilled in the art, i.e., for instance as a desktop 29(4), a laptop 29(3), a mobile phone 29(2) or a personal digital assistant 29(1), or any other terminal available on the market now or in the future. Moreover, figure 2 shows a plurality of servers 31(j), j = 1, 2, 3, ..., J. Typically, these servers 31(j) have access to (large) databases stored in suitable memories. One such memory 33 is shown in figure 2 and is connected to server 31(J). However, it is to be understood that the same memory 33 can be arranged to be accessible by other servers 31(j) as well.

The terminals 29(i) are arranged to operate as clients to the servers 31(j). To that end the terminals 29(i) and servers 31(j) are arranged to communicate with one another via a telecommunication network 27.

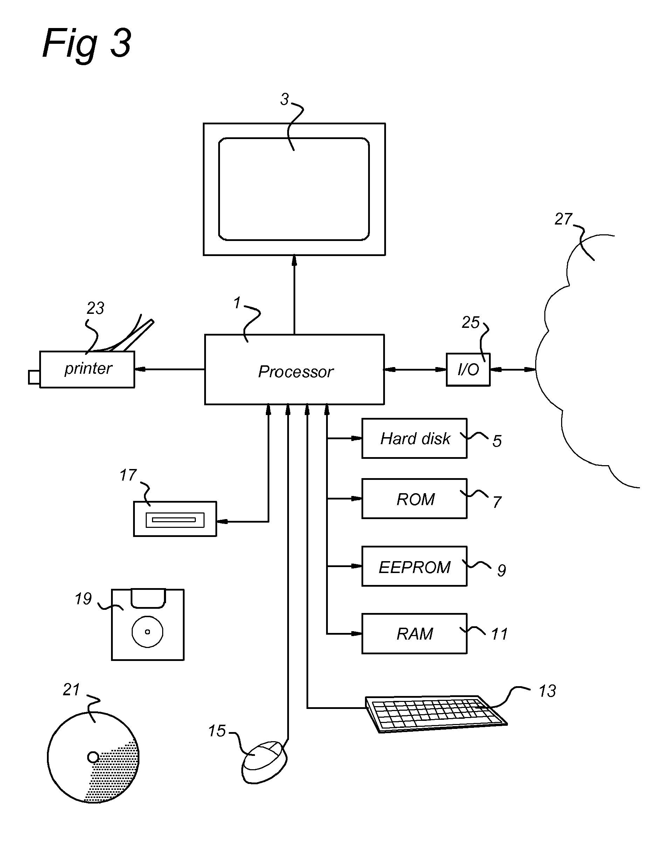

Figure 3 shows an overview of a computer arrangement that can be used to implement each one of the terminals 29(i) and each one of the servers 31(j) shown in figure 2. Depending on the type of terminal 29(i) (PC, laptop, PDA, smart phone, etc.) or server 31(j) the components of the computer arrangement as shown in figure 2 may be implemented in a different way, as will be evident to persons skilled in the art.

The computer arrangement comprises a processor 1 for carrying out arithmetic and logical operations. The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to a device for inputting instructions, data etc. by a user, like a keyboard 13, and a mouse 15. The mouse is used, for instance, for moving a cursor over the display screen and giving the computer arrangement instructions by suitable actions performed by a user on a left mouse button, a right mouse button, a mouse wheel, a mouse track ball, etc. as is known to persons skilled in the art. Other input devices, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, memory sticks, etc. as is known to persons skilled in the art.

The processor 1 is also connected to a printer 23 for printing output data on paper, as well as to a display 3, for instance, a monitor or LCD (Liquid Crystal Display) screen, or any other type of display known to persons skilled in the art.

The processor 1 is connected to a communication network 27, for instance, the Public Switched Telephone Network (PSTN), a Local Area Network (LAN), a Wide Area Network (WAN), the Internet, etc. by means of an I/O device 25. The processor 1 is arranged to communicate with other communication arrangements through the network 27.

The data carrier 19, 21 may comprise a computer program product in the form of data and instructions arranged to provide the processor 1 with the capacity to perform a method in accordance with the invention. However, such computer program product may, alternatively, be downloaded via the telecommunication network 27.

The processor 1 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor 1 through the network 27.

4. The interface according to the invention

It is observed that the principles of the present invention can, e.g., be used in any environment where a user of a terminal 29(i) wishes to query a collection of dependency graphs with terms and relations between those terms. This holds even though, below, the invention will be explained with reference to its application in the D&D GUI. In this D&D GUI "items" are "terms" used in sentences. So, in the example illustrated below, the relations between the terms are linguistic relations.

The D&D GUI of PHASAR was developed to allow the searcher to find, if desired, all dependency graphs in the documents (not just subject-verb-object factoids) and their sub-graphs. It is named after an ancient computer game that hinged on providing the searcher with an interactively extendable view of a large hidden space.

In the D&D GUI a query itself has the form of a dependency graph, consisting of terms connected by directed relations. In the D&D GUI, the query is represented graphically by one or more boxes, connected by marked arrows that represent the relations. The relations may be syntactical in nature (subject, object, ...), or semantical (depending on the semantical framework used) or logical (AND, OR, ...) or textual (before, after, ...).

4.1 Boxes

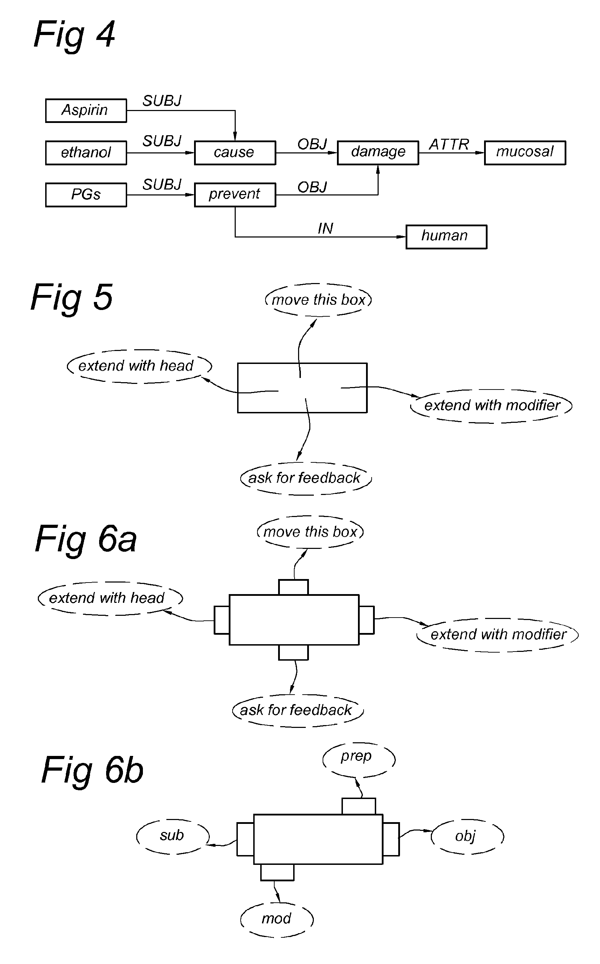

Each term of the query is represented graphically on the display 3 by a box inscribed with that term. A box can be connected to another box by a directed arrow marked with a relator (the name of a relation), thus denoting a dependency triple. A number of boxes connected in this way denotes a dependency graph, and may serve as a query. This is schematically illustrated in figure 4 for the sentence used above to explain dependency graphs. It is observed that figure 4 shows that the boxes are delineated by lines and connected by arrows. These lines and arrows may have any suitable form, i.e., they may be dotted, solid, etc.

In all of the following examples, the arrow is directed from the head of a triplet to its modifier.

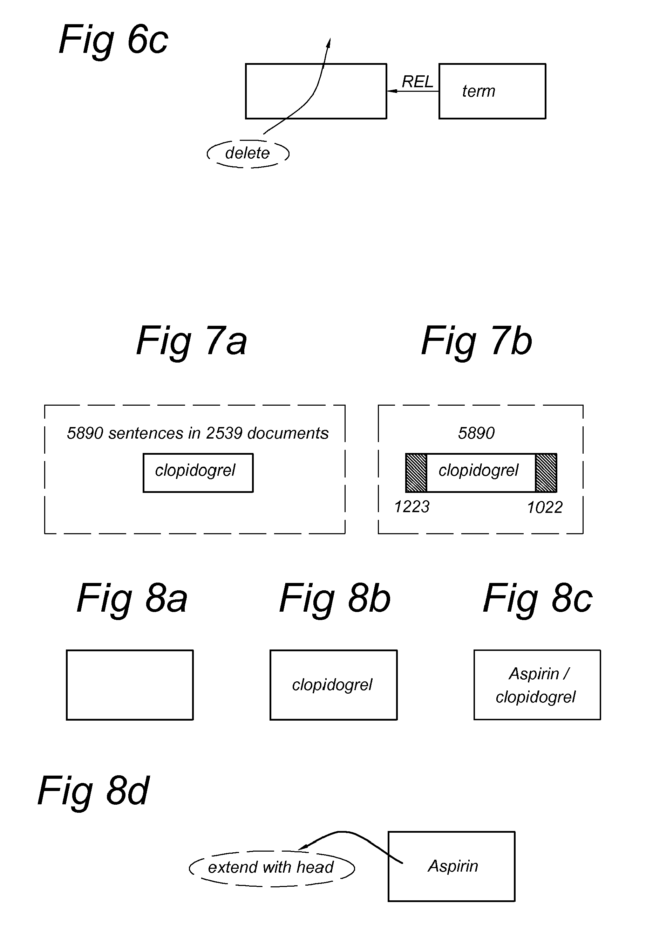

The computer program as running on the terminal 29(i) starts with presenting an empty box to the user on display 3 (cf. Figure 8a).

The program allows the user to *activate* the box by moving the cursor with mouse 15 into the box. Activation can also be done via any other equivalent action, for instance, by a single click of one of the mouse buttons. After having activated the box, the user may modify the contents of the box, or input an instruction for the processor 1 by performing a predetermined action on one of the sides of the box with the cursor as instructed by mouse 15.

In a first embodiment, such an action is implemented by the program to allow the user to drag the cursor with mouse 15 from a position inside the box to another position over one of its sides, for instance by keeping the left mouse button pressed while moving the cursor across that side. This process is called *pulling* (on) that side of the box.

An action on a different side of the box may mean a different instruction to the processor 1. For instance, as shown in figure 5, the box has four different sides and performing an action on the sides may be converted by the computer arrangement in the following instructions:

- acting on the right side = instruction to add a box that functions as a modifier to the present box, meaning that the added box will be automatically connected to the box already present on the display by an arrow, where the arrow is directed from the already present box to the new box,

- acting on left side = instruction to add a box that functions as a head to the present box, meaning that the added box will be automatically connected to the box already present on the display by an arrow, where the arrow is directed from the new box to the already present box,

- acting on lower side = request for feedback; when performing this action a list of possible heads or modifiers and/or relations will show up from which the user can make a selection.

- acting on the upper side = instruction to move this box to another position on the display 3.

- Dragging the cursor from a point outside the box across one side of the box and then across an other, for instance opposite, side to a point outside the box = instruction to delete the box; provided the box is connected by precisely one arrow to one other box, the box will be removed from the screen together with that arrow.

Of course, these functions of these sides can be exchanged.

In a second embodiment the display is a touch screen monitor that receives instructions from a user via a finger touching and or moving over the display 3. Then, the user may activate a box by touching the box on the display 3 and may perform the action as mentioned above by shifting a finger from the inside of the box to the outside over the side concerned. Alternatively, the user may perform the action on the side concerned by simply pushing with a finger one or more times on a tab shown on the touch screen, or on the location of the touch screen where the side is shown. Instead of a finger, the user may be allowed to use any other suitable means to operate the touch screen, including but not limited to any pin or stylus shaped device.

This enables, for instance, keyboardless mobile search applications that can be carried out by pda's and mobile phones.

The touch screen may be arranged to show a virtual keyboard with keys that can be touched by a user, for instance, to input letters of words that are to be placed inside the boxes or next to the dependency arrows.

In a third embodiment, as shown in figure 6A, the box may have tabs along its sides, and the actions as defined above may be implemented as clicking on a tab at a specific side of the box, which may be appropriately marked:

- clicking on the right side tab = instruction to add a box that functions as a modifier to the present box, meaning that the added box will be automatically connected to the box already present on the display by an arrow, where the arrow is directed from the already present box to the new box,

- clicking on the left side tab = instruction to add a box that functions as a head to the present box, meaning that the added box will be automatically connected to the box already present on the display by an arrow, where the arrow is directed from the new box to the already present box,

- clicking on the lower side tab = request for feedback, when performing this action a list of possible heads or modifiers and relations will show up from which the user can make a selection.

- clicking on the upper side tab = instruction to move this box to another position on the display 3.

- Clicking on an appropriately marked tab = instruction to delete the box; provided the box is connected by precisely one arrow to one other box, the box will be removed from the screen together with that arrow

In yet another embodiment, as shown in figure 6B, the box has some number of smaller tabs along its sides, corresponding to certain relations and directions, and clicking on one of them acts as a request for feedback limited to this relation and direction. The tabs may have a distinct colour. Further instructions are available e.g. by right-clicking on a mouse.

In figures 5 and further the boxes are shown to be rectangular. However, the invention is not restricted to this embodiment. The boxes may have any suitable shape, including any polygon type and convex shape, and may have any suitable colour. Also, there may be embodiments with fewer or more than four tabs. Moreover, the boxes may have sides which are curved or have any other suitable shape.

Moreover, an action on a side may relate to more than one instruction with more than one meaning.

To summarize, actions on the sides may be one of the following:

- a user dragging a cursor with a mouse over a side,

- a user clicking a button of a mouse when a cursor is located on a tab next to a side,

- a user exerting pressure with some means or moving over a location in the display where the display shows the side if the display is a touch screen

- a user exerting pressure with some means one or more times on a location in the display where the display shows the side if the display is a touch screen.

- A user dragging a cursor with mouse across two, for instance opposite, sides of the box.

### 4.2 Quantitative feedback

In order to keep the user informed about the yield of a query and about the quantitative effects of making choices, every query as well as its component boxes or their tabs may be marked with quantitative information.

For instance, once it has been submitted, the query is marked with its number of hits (the number of sentences or documents matching the query according to the matching strategy, see 2.3). An example is shown in figure 7A. Figure 7A shows that the term "clopidogrel" is found to be present in 5890 sentences in 2539 documents.

Similarly, the sides or tabs of one or more boxes in the query may be marked with the number of terms with which they may be extended, as shown in figure 7B (see 4.4), an embodiment with two tabs for the extension of the box with left- and right-going relations, respectively.

### 4.3 Starting a query

Now, the way a query can be performed while using the interface according to the invention will be explained in more detail.

In the D&D interface, the search process starts with an empty box shown on display 3, representing an empty query (which matches all documents a server 31(j) can find and therefore is of little use). See figure 8A.

As shown in figure 8B, the user can enter a term (e.g. the name of a drug) into the box by activating the box first and then typing the term into it, or by editing the contents of the box. The term is for instance "clopidogrel".

Instead of typing a term, it is possible to add a term to a box by selecting a term from a term list shown on the display, or as searched for in an other window, for instance by double-clicking on the term, and moving the selected term to the box where it can be "dropped" by an action like a single mouse click or by operating a key combination on a keyboard.

Moreover, it is envisaged to add terms into a box that already comprises a term. By adding the term to the already present term they form an OR-relation. Again this can be done by a drag-and-drop action performed with the mouse 15 and/or keyboard 13 from a term list or document text or by editing the contents of a box like the one shown in figure 8C.

The program allows the user to submit this term as a query to a server 31(j). Such a "submit" action can be implemented by means of a SUBMIT button shown on the display that can e.g. be operated by a mouse click or by touching the button with a finger. Alternatively, the ENTER key on the keyboard 13 may be used to cause a search to be made by the server. Other submit actions may be used instead. After having submitted the request, the server receives the request and performs the query in one or more of the databases 33 to which it has access. The server sends the hits (query results) to the terminal. The terminal may display the number of hits as shown in figure 7A and 7B.

The user can then extend the query by adding another term, as explained in the next section and browse the documents that are delivered as a result of the query by a server 31(j). He can also move the box to any suitable position on the screen, for instance, by pulling on its top side and dragging it to another position.

4.4 Extending the query

As in traditional word-based search engines, a query may be *specialized* (narrowed down) by extending the query with another term, but in the present interface the new term must be added as a head or modifier to another term which is already in the query, forming together with a suitable relator and this other term a dependency triplet. The user therefore has to choose whether to add the new term as a head or as a modifier, and with what relator.

Figure 8D shows how a new head can be added. To extend a (nonempty) query with a new head, the user activates one of the boxes of that query and extends it with an empty box as head by pulling on its left side, as described earlier with reference to figures 5 and 6A, 6B. Figure 8D shows the example where the box already contains the term "Aspirin".

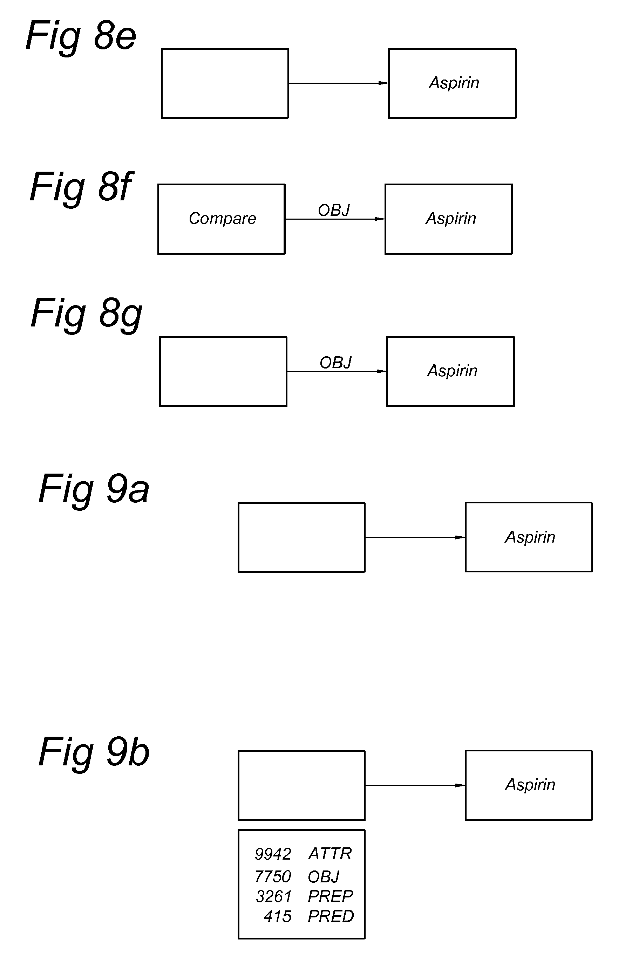

The new box that should form the new head is e.g. generated by the computer arrangement when the user has dragged the cursor across the left side of the box and releases the left mouse button when the cursor is at a suitable position on the display 3 (or by any other suitable action). A new, empty box will then appear on that position, linked to the other box by an arrow, as shown in figure 8E. This query matches any occurrence in the documents of a triplet whose modifier is Aspirin.

In addition to or alternatively to adding a head to a non-empty box, the query can be extended with a new modifier in a similar way, i.e., by pulling on the right side of a box as explained above.

The user may now activate the empty box and type into it a relator followed by a suitable term. This relator will then be shown alongside the arrow, as in figure 8G. Alternatively, he may choose a term and/or a relator from the feedback provided by the index of the system, as described in section 4.5. The user may choose to leave the term and/or the relator unspecified.

Figure 8F shows, for example, the effect of choosing the relator 'OBJ' and the head 'compare' on the situation described in figure 8E.

A box may in this way be extended repeatedly with a head or a modifier, quickly narrowing the query. At any point, the user may submit the query to the server as indicated above.

4.5 Feedback from the index

In this section, selection by using an index provided by using the feedback action will be explained.

As explained above, in order to help the user in choosing a suitable triplet with which to extend the query, feedback from the index over those documents which are matched by the query extended with a box can be obtained by activating the box and instructing the system to give this feedback, e.g. by pulling on the bottom boundary of the box, or by clicking on the pertinent tab.

Assume, for example, that the user has built the query described above in figure 8E and as shown again in figure 9A. This query matches any occurrence in the documents of a triplet whose modifier is Aspirin.

The feedback in principle consists of those terms and relators that, used to extend the query, would match one or more hits in the documents, together with their *frequency* (the number of hits) and arranged in decreasing order of frequency. In order to reduce the fan-out in presenting this list, it may be presented on the display in two steps: first the possible relators are shown, each with their number of hits, see figure 9B.

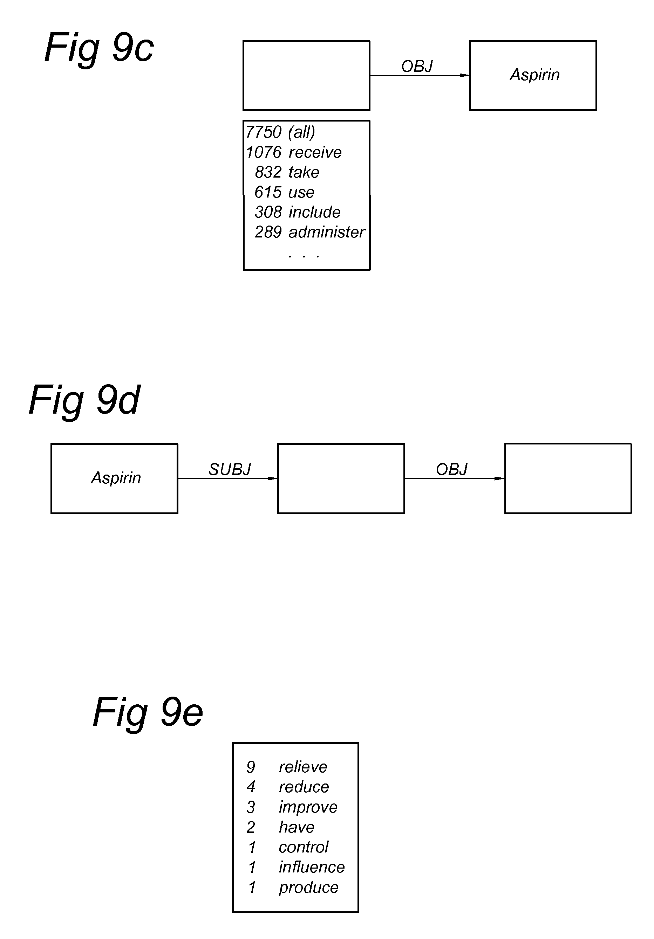

Second, after the user has selected one of the displayed relators, for instance "OBJ", the *term list* appears, i.e., a list of those terms in the hits to which they relate, each with their frequency. An example is shown in figure 9C.

Alternatively, a list of terms together with their relators (with frequencies) may appear, from which the user can select both together.

The following more complicated example query matches all factoids with 'Aspirin' as subject and 'pain' as object. While using the techniques explained above, and as shown in figure 9D, it may be built by starting with an empty box in which 'Aspirin' is entered; extending it with a first, empty box on the right and choosing the SUBJ relator; and, then, extending that first, empty box on the right with a second box containing the term 'pain' and having an OBJ relation to the first, empty box.

The system allows a user to ask for feedback on the first, empty box, for instance, by pulling its bottom side, and it will show a term list, for instance the one shown in figure 9E. The user may drag-and-drop terms from the term list to an empty box, or add them into a non-empty box as described in section 4.3.

It is observed that in the above description of the query action, the example of a query performing server external to the computer arrangement itself is used. However, the invention also covers an embodiment where the computer arrangement itself is arranged to perform such a query in a database that is accessible by the computer arrangement.

4.6 Browsing

It is to be understood that the PHASAR system according to the invention may use all different browsing modes, showing larger or smaller portions of the documents, as already explained with reference to the prior art, like document browsing, passage browsing, and sentence browsing. Click throughs to original documents may be provided as well. It is to be understood that the invention is limited by the annexed claims and its technical equivalents only.

In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

**Claims**

1. A computer arrangement comprising a processor, a display, a memory, and an input device, the display, memory and input device being connected to the processor, the input device allowing a user to control a cursor on said display, the memory comprising instructions and data allowing the processor to present the following user interface:

   • to present a configuration of boxes on the display to a user, said boxes having either a multisided polygon shape or other convex shape, and each box capable of containing text marking that box, and each of said boxes being connected by one or more directed arrows to or from at least one other box, said one or more arrows each being marked by a relator, said relator being either empty or a text indicating a linguistic relation;
   • to present an initial configuration comprising one empty box;
   • to allow said user to activate any box in said configuration by either

      ○ moving the cursor on said display into said box or clicking said cursor when located on said box by means of said input device, or
      ○ performing a touch action on said box on said display when said display is a touch screen;

   • to allow said user to modify the text contained in said activated box;
   • to allow said user to perform an action on one or two of the sides of said activated box, said action being interpreted as an instruction to be carried out by said processor.

2. Computer arrangement according to claim 1, wherein said instructions allow said processor to compute from said configuration a corresponding dependency graph, each box in said configuration representing a node in said dependency graph marked with the text in said box and each arrow in said configuration representing an edge in said dependency graph marked with the relator of said arrow.

3. Computer arrangement according to claim 2, wherein the instructions and data allow said processor:

   • either to perform a query itself by using data of said dependency graph as query data,
   • or to send data of said dependency graph as query data to a server arranged to perform a query corresponding to said query data, and to receive retrieved data from said server in reply to said query.

4. Computer arrangement according to any of the preceding claims, wherein said instructions and data allow said processor to perform the following:

   • to receive a first action from the user on a first side of an activated box in said configuration, and to interpret said first action as an instruction to add a new box next to said first side of said activated box on the display, said new box being empty and connected to said activated box by an arrow, the arrow being either directed from said activated box to said new box or from said new box to said activated box.

5. Computer arrangement according to claim 4, wherein said instructions and data allow the processor to perform the following:

• when the first side is a right side of the activated box, then the arrow is directed from the activated box to the new box,
• when the first side is a left side of the activated box, then the arrow is directed from the new box to the activated box.

6. Computer arrangement according to any of the preceding claims, wherein said instructions and data allow said processor to perform the following action: to receive a second action from the user on a second side of said activated box, to interpret said second action as a request for feedback by showing to the user a list of possible heads or modifiers and relations on the display and allowing the user to make a selection from that list.

7. Computer arrangement according to any of the preceding claims, wherein said instructions and data allow said processor to perform the following action: to receive a third action from the user on a third side of said activated box, and to interpret said third action as an instruction to drag the activated box to another position on the display, all arrows from other boxes to the activated box and to other boxes from the activated box moving accordingly.

8. Computer arrangement according to any of the preceding claims, wherein said instructions and data allow said processor to perform the following action: to receive a fourth action from the user on two sides of said activated box where said box is connected by precisely one arrow to a fifth box, and to interpret said fourth action as an instruction to remove said box from the screen together with said arrow

9. Computer arrangement according to any of the preceding claims, wherein said input device comprises a mouse and said action on one of the sides of said activated box is one of the following actions:

• a user pressing a button of said mouse while dragging the cursor from inside said box outwards across said side of said box;
• a user clicking a button of a mouse when the cursor is located on a tab immediately next to said side, said tab being a small rectangle or other convex shape, said tab possibly having a distinctive colouring and possibly being inscribed with some text indicating a linguistic relation.

10. Computer arrangement according to any of the preceding claims, wherein said display is a touch screen and said action on one of the sides of said activated box is one of the following actions:

• a user exerting pressure with some means on a location inside said box and then dragging said means outwards across said side of said box;
• a user exerting pressure with some means on a location in said display where said display shows a tab immediately next to said side, said tab being a small rectangle or other convex shape, said tab possibly having a distinctive colouring and possibly being inscribed with some text indicating a linguistic relation.

11. System comprising a computer arrangement according to claim 3 and a server, the server being arranged to receive said query data, to perform the query, to retrieve data in accordance with said query and send retrieved data to said computer arrangement.

12. A method of presenting a user interface in a computer arrangement comprising a processor, a display, a memory, and an input device, the input device comprising a mouse allowing a user to control a cursor on said display, the display, memory and input device being connected to the processor, the method comprising:

• presenting a configuration of boxes on the display to a user, said boxes having either a multisided polygon shape or other convex shape, and each box capable of containing text marking that box, and each of said boxes being connected by one or more directed arrows to or from at least one other box, said one or more arrows each being marked by a relator, said relator being either empty or a text indicating a linguistic relation;
• presenting an initial configuration comprising one empty box;
• allowing said user to activate any box in said configuration by either

○ moving the cursor on said display into said box or clicking said cursor at least once when located on said box by means of said input device, or, or
○ performing a touch action on said box on said display when said display is a touch screen;

• allowing said user to modify the text contained in said activated box;
• allowing said user to perform an action on one or two of the sides of said activated box, said action being interpreted as an instruction to be carried out by said processor.

**13.** A computer program product comprising instructions and data that can be loaded by a computer arrangement comprising a processor, a display, a memory, and an input device, the display, memory and input device being connected to the processor, the computer program product allowing said processor to perform the method as defined in claim 12.

**14.** A data carrier comprising a computer program product as defined in claim 13.

# Fig 1

medline contains 18156760 documents

Subject | Verb | Object

Browse by sentence ▼

Match by document
Match by sentence

Clear | Selection: | Thesaurus

# Fig 2

# Fig 3

## Fig 4

```
┌─────────┐   SUBJ
│ Aspirin │──────────┐
└─────────┘          │
                     ▼
┌─────────┐  SUBJ  ┌───────┐  OBJ  ┌────────┐  ATTR  ┌──────────┐
│ ethanol │───────▶│ cause │──────▶│ damage │───────▶│ mucosal  │
└─────────┘        └───────┘       └────────┘        └──────────┘
                                        ▲
┌─────────┐  SUBJ  ┌─────────┐  OBJ    │
│   PGs   │───────▶│ prevent │─────────┘
└─────────┘        └─────────┘
                        │       IN        ┌─────────┐
                        └────────────────▶│  human  │
                                          └─────────┘
```

## Fig 5

( move this box )

( extend with head )

( extend with modifier )

( ask for feedback )

## Fig 6a

( move this box )

( extend with head )

( extend with modifier )

( ask for feedback )

## Fig 6b

( prep )

( sub )

( obj )

( mod )

## Fig 6c

REL · term

delete

## Fig 7a

5890 sentences in 2539 documents

clopidogrel

## Fig 7b

5890

clopidogrel

1223 · 1022

## Fig 8a

## Fig 8b

clopidogrel

## Fig 8c

Aspirin / clopidogrel

## Fig 8d

extend with head · Aspirin

**Fig 8e**

```
┌──────────────┐              ┌──────────────┐
│              │──────────────▶│   Aspirin    │
│              │              │              │
└──────────────┘              └──────────────┘
```

**Fig 8f**

```
┌──────────────┐     OBJ      ┌──────────────┐
│   Compare    │──────────────▶│   Aspirin    │
│              │              │              │
└──────────────┘              └──────────────┘
```

**Fig 8g**

```
┌──────────────┐     OBJ      ┌──────────────┐
│              │──────────────▶│   Aspirin    │
│              │              │              │
└──────────────┘              └──────────────┘
```

**Fig 9a**

```
┌──────────────┐              ┌──────────────┐
│              │──────────────▶│   Aspirin    │
│              │              │              │
└──────────────┘              └──────────────┘
```

**Fig 9b**

```
┌──────────────┐              ┌──────────────┐
│              │──────────────▶│   Aspirin    │
│              │              │              │
└──────────────┘              └──────────────┘
┌──────────────┐
│ 9942   ATTR  │
│ 7750   OBJ   │
│ 3261   PREP  │
│  415   PRED  │
└──────────────┘
```

*Fig 9c*

```
                              ┌──────────┐        OBJ        ┌──────────┐
                              │          │ ─────────────────▶│ Aspirin  │
                              │          │                   │          │
                              └──────────┘                   └──────────┘
```

7750 *(all)*
1076 *receive*
 832 *take*
 615 *use*
 308 *include*
 289 *administer*
    . . .

*Fig 9d*

```
  ┌──────────┐    SUBJ    ┌──────────┐    OBJ    ┌──────────┐
  │ Aspirin  │ ──────────▶│          │ ─────────▶│          │
  └──────────┘            └──────────┘           └──────────┘
```

*Fig 9e*

9    *relieve*
4    *reduce*
3    *improve*
2    *have*
1    *control*
1    *influence*
1    *produce*

Europäisches
Patentamt
European
Patent Office
Office européen
des brevets

## EUROPEAN SEARCH REPORT

**Application Number**

EP 10 16 0829

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Microsoft Office Visio 2007: Add and Glue connectors with AutoConnect" , [Online] 2007, XP002550690 Retrieved from the Internet: URL:http://office.microsoft.com/en-us/visio/HA100243921033.aspx> [retrieved on 2009-10-15] * Microsoft Visio 2007 AutoConnect feature: "Use AutoConnect while dragging shapes onto the page": points 1-3; "Use AutoConnect with shapes already on the page": points 1-3 * | 1-14 | INV. G06F17/30 G06F9/44 G06F17/27 |
| A,D | CORNELIS H.A.KOSTER, OLAF SEIBERT, MARC SEUTTER: "The PHASAR Search Engine" PROCEEDINGS NLDB 2006, SPRINGER LNCS3999, [Online] 2007, pages 141-152, XP002550691 Retrieved from the Internet: URL:http://www.cs.ru.nl/~kees/home/papers/nldb.pdf> [retrieved on 2009-10-15] * abstract, introduction, section 1.3, 1.5 * | 1-14 | |
| X | "Microsoft Office Visio 2007: Create a basic flowchart" 2007, pages 1-10, XP002583228 Retrieved from the Internet: URL:http://office.microsoft.com/en-us/visio/HP012077271033.aspx?mode=print> [retrieved on 2010-05-20] * first figure; section "What the flowchart shapes represent"; section "Create a flowchart" * | 1-14 | TECHNICAL FIELDS SEARCHED (IPC) G06F |

The present search report has been drawn up for all claims

| Place of search | Date of completion of the search | Examiner |
|---|---|---|
| Berlin | 26 May 2010 | Haffner, Ronald |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.H.A. Koster ; M. Seutter ; O. Seibert.** Parsing the Medline Corpus. *Proceedings RANLP,* 2007, 325-329

- The PHASAR Search Engine. **C.H.A. Koster ; O. Seibert ; M. Seutter.** Proceedings NLDB. Springer LNCS, 2006, vol. 3999, 141-152